(19) Europäisches Patentamt
European Patent Office
Office européen des brevets

(11) **EP 2 850 687 B1**

(12) **EUROPÄISCHE PATENTSCHRIFT**

(45) Veröffentlichungstag und Bekanntmachung des Hinweises auf die Patenterteilung:
**28.06.2017  Patentblatt 2017/26**

(21) Anmeldenummer: **13726466.9**

(22) Anmeldetag: **23.05.2013**

(51) Int Cl.:
*H01M 8/0256* (2016.01)    *H01M 12/08* (2006.01)

(86) Internationale Anmeldenummer:
**PCT/EP2013/060645**

(87) Internationale Veröffentlichungsnummer:
**WO 2014/000997 (03.01.2014 Gazette 2014/01)**

(54) **ELEKTRISCHER ENERGIESPEICHER**

ELECTRICAL ENERGY STORE

DISPOSITIF DE STOCKAGE D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.06.2012  DE 102012211325**

(43) Veröffentlichungstag der Anmeldung:
**25.03.2015  Patentblatt 2015/13**

(73) Patentinhaber: **Siemens Aktiengesellschaft 80333 München (DE)**

(72) Erfinder:
• LANDES, Harald
  **90607 Rückersdorf (DE)**
• SCHUH, Carsten
  **85598 Baldham (DE)**
• SOLLER, Thomas
  **94469 Deggendorf (DE)**

(56) Entgegenhaltungen:
**EP-A2- 1 211 742         WO-A1-2005/117192
DE-A1-102009 057 720    US-A1- 2004 053 104**

EP 2 850 687 B1

**EP 2 850 687 B1**

**Beschreibung**

Die Erfindung betrifft einen elektrischen Energiespeicher nach Anspruch 1.

Zur Speicherung von überschüssigem elektrischem Strom, der beispielsweise bei der Stromerzeugung durch erneuerbare Energiequellen oder durch Kraftwerke anfällt, die im Bereich des optimalen Wirkungsgrades betrieben werden, und für den temporär kein Bedarf im Netz besteht, werden verschiedene technische Alternativen angewandt. Eine davon ist die wieder aufladbare Metall-Luftbatterie (Rechargeable Oxide Battery, ROB). ROBs werden üblicherweise bei Temperaturen zwischen 600°C und 900°C betrieben. Hierbei wird Sauerstoff, der an einer (positiven) Luftelektrode der elektrischen Zelle zugeführt wird, in Sauerstoffionen umgewandelt, durch einen Festkörperelektrolyten transportiert und zur gegenüberliegenden negativen Elektrode gebracht (Entladevorgang) bzw. von der negativen Elektrode über den Festkörperelektrolyten zur Luftseite transportiert (Ladevorgang). An der negativen Elektrode findet (je nachdem, ob geladen oder entladen wird) eine Reduktions- bzw. Oxidationsreaktion mit einem gasförmigen Redoxpaar statt, wobei der von dem gasförmigen Redoxpaar aufgenommene oder abgegebene Sauerstoff durch Diffusion der Komponenten des Redoxpaares auf ein poröses, also gasdurchlässiges und ebenfalls oxidierbares und reduzierbares Speichermedium übertragen wird. Aufgrund der z.B. für den Sauerstofftransport im keramischen Elektrolyten benötigten hohen Temperaturen für diesen Prozess ist die Werkstoffauswahl für die verwendeten Zellenwerkstoffe und die Konstruktion der Zellenteile sowie die Anordnung des Speichermediums sehr komplex. Insbesondere leiden die einzelnen Komponenten nach mehreren Redoxzyklen, die bei den besagten Betriebstemperaturen betrieben werden. Ferner ist für eine wirtschaftliche Nutzung stets eine Erhöhung der Speicherdichte pro Speicherzelle bzw. pro Volumeneinheit des Energiespeichers anzustreben.

Ein Beispiel hierfür ist in der DE 10 2009 057720 A1 gegeben.

Aufgabe der Erfindung ist es daher, einen elektrischen Energiespeicher auf Basis einer ROB bereitzustellen, der gegenüber dem Stand der Technik eine bei hoher mechanischer Stabilität verbesserte Speicherdichte aufweist.

Die Lösung der Aufgabe erfolgt durch einen elektrischen Energiespeicher mit einer Speicherzelle mit den Merkmalen des Patentanspruchs 1. Der erfindungsgemäße elektrische Energiespeicher nach Anspruch 1 weist eine Speicherzelle auf, die wiederum eine Luftelektrode, die mit Luftkanälen einer Luftzufuhrvorrichtung in Verbindung steht und eine Speicherelektrode umfasst. In der Regel ist zwischen Luftelektrode und der Speicherelektrode ein Festkörperelektrolyt angeordnet. Die Speicherelektrode wiederum grenzt an eine Speicherstruktur an, wobei an der Speicherelektrode elektrische Kontakte anliegen, wobei sich die Speicherstruktur dadurch auszeichnet, dass in ihr Kontaktpins integriert sind, die aus einer Oberfläche der Speicherstruktur herausragen und diese Kontaktpins mit der Speicherelektrode elektrisch in Kontakt stehen.

Die Kontaktpins sind somit direkt in die Speicherstruktur integriert. Sie werden bei der Herstellung der Speicherstruktur bereits in diese eingebracht. Die Kontaktpins ragen auf der Speicherelektrodenseite geringfügig aus der Speicherstruktur hervor (bevorzugt weniger als 5 mm), so dass stets ein Kontakt zwischen der Elektrode und den Kontaktpins gewährleistet ist. Somit besteht zwischen der Speicherelektrode und der Speicherstruktur ein geringer Abstand. Dieser Abstand zwischen Speicherelektrode und Speicherstruktur kann beispielsweise auch zum Durchfluten mit einem Spülgas oder zur Regulierung der Konzentration eines noch zu erläuternden Shuttlegases dienen. Ferner kann es zweckmäßig sein, zwischen den Kontaktstiften und der Speicherelektrode ein zusätzliches Kontaktnetz anzuordnen, durch das ein besserer Abfluss der Elektronen auf die Kontaktstifte erfolgen kann.

Der beschriebene elektrische Energiespeicher mit der Speicherzelle und der Speicherstruktur hat insbesondere den Vorteil, dass durch eine verhältnismäßig geringe Anzahl von Kontaktpins der Strompfad durch die Speicherzelle über die Kontaktpins gewährleistet wird, wobei ein Höchstmaß an Volumen der Speicherstruktur bzw. des aktiven Speichermaterials gewährleistet ist. Die Energiedichte des elektrischen Energiespeichers pro Volumeneinheit des Energiespeichers wird durch diese Maßnahmen erhöht. Ferner kann eine Speicherstruktur mit den integrierten Kontaktpins günstig großserienmäßig hergestellt werden. Hierdurch werden auch die Gesamtkosten des elektrischen Energiespeichers bei erhöhter Energiedichte verringert.

Es hat sich herausgestellt, dass der Durchmesser der Kontaktpins in vorteilhafter Weise zwischen 2 mm und 7 mm, besonders bevorzugt zwischen 2 mm und 4 mm beträgt. Hierbei kann der Querschnitt der Kontaktpins verschiedene zweckmäßige Geometrien annehmen. Zweckmäßig ist hierbei insbesondere ein kreisrunder, jedoch auch ein ovaler oder rechteckiger bzw. vieleckiger Querschnitt. Der Querschnitt der Kontaktpins ist insbesondere für die Herstellung der Kontaktpins an sich sowie der Aussparung der Speicherstruktur relevant.

Der Abstand zwischen den Kontaktpins beträgt dabei bevorzugt zwischen 10 mm und 30 mm, besonders bevorzugt zwischen 17 mm und 21 mm. Dieser Abstand der Kontakpins ist klein genug, das ein ungestörter Abfluss der Elektronen über die Kontakte erfolgen kann, gleichzeitig ist er jedoch groß genug, um möglichst viel Volumen für die Speicherstruktur zur Verfügung zu stellen.

Ferner ist es zweckmäßig, den elektrischen Energiespeicher aus mehreren verschiedenen Speicherzellen aufzubauen, die insgesamt in einem Stack zusammengefasst sind. Hierbei ist es zweckmäßig, eine Interkonnektorplatte anzuwenden, die auf einer Luftseite Luftkanäle enthält, und auf einer gegenüberliegenden Seite, die als Speicherseite

2

bezeichnet wird, eine Aufnahmevertiefung aufweist.

Der Strompfad in einem Energiespeicher mit einem Stack der wiederum Interkonnektorplatten aufweist, erfolgt hierbei in bevorzugter Weise folgendermaßen: Zunächst durchläuft der Strom ein Volumenmaterial einer ersten Interkonnektorplatte, fließt weiter über Kontaktstege zwischen den Luftkanälen der ersten Interkonnektorplatte, an die die Luftelektrode anliegt, eine weitere Station ist der Festkörperelektrolyt gefolgt von der Speicherelektrode. Von hier fließen die Elektronen entlang des Strompfades durch die Kontaktpins der Speicherstruktur in eine zweite Interkonnektorplatte und abschließend in das Volumenmaterial der zweiten Interkonnektorplatte. Je nachdem wie viele Stacks übereinander folgen, wiederholt sich der beschriebene Strompfad mehrfach bis an äußeren Elektroden die Elektronen abgeleitet bzw. eingeleitet werden.

In einer weiteren zweckmäßigen Ausgestaltungsform der Erfindung weisen die Kontaktpins abgerundete Köpfe auf, die auf der Speicherelektrode aufliegen. Ein derartiges Nietendesign kann zweckmäßig sein, um die mechanische Druckbelastung des Stackaufbaus bzw. die Druckbelastung auf die im Wesentlichen aus einem keramischen Material bestehende Elektrodenstruktur zu verringern. Außerdem können durch diese abgerundete Kopfform auch fertigungsbedingte Toleranzen der Speicherstruktur oder der weiteren Stackkomponenten kompensiert werden. Weiter hilft ein zwischen den Kontaktpins und der Speicherelektrode befindliches Metallnetz (z.B. aus Nickel), um lokale Druckkräfte zu begrenzen.

Weitere Merkmale und weitere vorteilhafte Ausgestaltungsformen der Erfindung sind anhand der folgenden Figuren näher erläutert. Hierbei handelt es sich lediglich um beispielhafte Ausgestaltungsformen, die keine Einschränkung des Schutzumfangs darstellen.

Dabei zeigen:

Figur 1    eine schematische Darstellung einer Zelle einer Rechargeable Oxide Battery,

Figur 2    eine Explosionsdarstellung eines Stacks von oben betrachtet,

Figur 3    eine Explosionsdarstellung des Stacks aus Figur 2 von unten betrachtet,

Figur 4    einen Querschnitt durch eine Speicherzelle mit Strompfad,

Figur 5    eine Draufsicht auf eine Interkonnektorplatte, auf deren Speicherseite,

Figur 6    einen Querschnitt durch die Interkonnektorplatte nach Figur 5,

Figur 7    eine Draufsicht auf eine Speicherstruktur mit integrierten Kontaktpins und

Figur 8    einen Querschnitt durch die Speicherstruktur nach Figur 7.

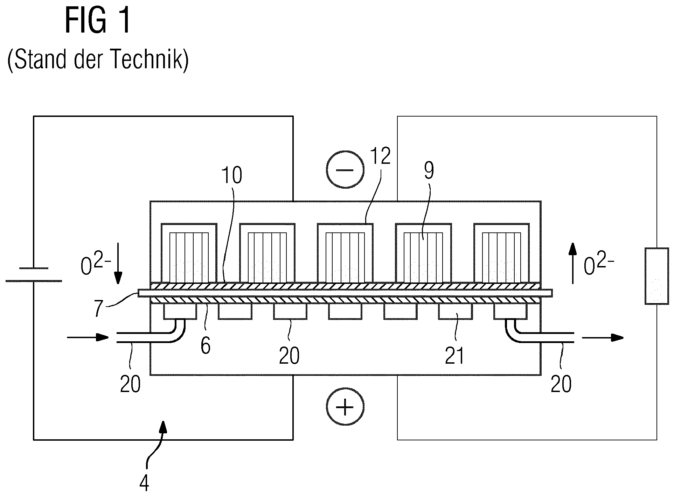

Anhand von Figur 1 soll zunächst schematisch die Wirkungsweise einer Rechargeable Oxide Batterie (ROB) beschrieben werden, insoweit dies für die vorliegende Beschreibung der Erfindung notwendig ist. Ein üblicher Aufbau einer ROB besteht darin, dass an einer positiven Elektrode 6, die auch als Luftelektrode bezeichnet wird, ein Prozessgas, insbesondere Luft, über eine Gaszufuhr 20 eingeblasen wird, wobei beim Entladen (Stromkreis auf der rechten Bildseite) der Luft Sauerstoff entzogen wird. Der Sauerstoff gelangt in Form von Sauerstoffionen $O^{2-}$ durch einen an der positiven Elektrode 6 anliegenden Feststoffelektrolyten 7, zu einer negativen Elektrode 10. Diese steht über ein gasförmiges Redoxpaar, z.B. ein Wasserstoff-Wasserdampf-Gemisch mit dem porösen Speichermedium in der Kanalstruktur in Verbindung. Würde an der negativen Elektrode 10 eine dichte Schicht des aktiven Speichermaterials vorliegen, so würde die Ladekapazität der Batterie schnell erschöpft werden.

Aus diesem Grund ist es zweckmäßig, an der negativen Elektrode 10 als Energiespeichermedium eine Speicherstruktur 9 aus porösem Material einzusetzen, das ein funktional wirkendes oxidierbares Material als ein aktives Speichermaterial, bevorzugt in Form von Eisen und/oder Eisenoxid enthält.

Über ein, beim Betriebszustand der Batterie gasförmiges Redoxpaar, beispielsweise $H_2/H_2O$, werden die, durch den Festkörperelektrolyten 7 transportierten Sauerstoffionen nach ihrer Entladung an der negativen Elektrode in Form von Wasserdampf durch Porenkanäle der porösen Speicherstruktur 9, die das aktive Speichermaterial umfasst, transportiert. Je nachdem, ob ein Entlade- oder Ladevorgang vorliegt, wird das Metall bzw. das Metalloxid (Eisen/Eisenoxid) oxidiert oder reduziert und der hierfür benötigte Sauerstoff durch das gasförmige Redoxpaar $H_2/H_2O$ angeliefert oder zum Festkörperelektrolyten zurück transportiert. Dieser Mechanismus des Sauerstofftransportes über ein Redoxpaar wird als Shuttlemechanismus bezeichnet.

Der Vorteil des Eisens als oxidierbares Material, also als aktives Speichermaterial in der Speicherstruktur 9, besteht darin, dass es bei seinem Oxidationsprozess in etwa dieselbe Ruhespannung von etwa 1 V aufweist, wie das

Redoxpaar $H_2/H_2O$ bei einem Partialdruckverhältnis von 1, andernfalls ergibt sich ein erhöhter Widerstand für den Sauerstofftransport durch die diffundierenden Komponenten dieses Redoxpaares.

Die Diffusion der Sauerstoffionen durch den Feststoffelektrolyten 7 benötigt eine hohe Betriebstemperatur von 600 bis 900°C der beschriebenen ROB, aber auch für die optimale Zusammensetzung des Redoxpaares $H_2/H_2O$ in Gleichgewicht mit dem Speichermaterial ist dieser Temperaturbereich vorteilhaft. Hierbei ist nicht nur die Struktur der Elektroden 6 und 10 und des Elektrolyten 7 einer hohen thermischen Belastung ausgesetzt, sondern auch die Speicherstruktur 9, die das aktive Speichermaterial umfasst.

Ein Vorteil der ROB besteht darin, dass sie durch ihre kleinste Einheit, nämlich die Speicherzelle modular nahezu unbegrenzt erweiterbar ist. Somit ist eine kleine Batterie für den stationären Hausgebrauch ebenso darstellbar wie eine großtechnische Anlage zur Speicherung der Energie eines Kraftwerkes.

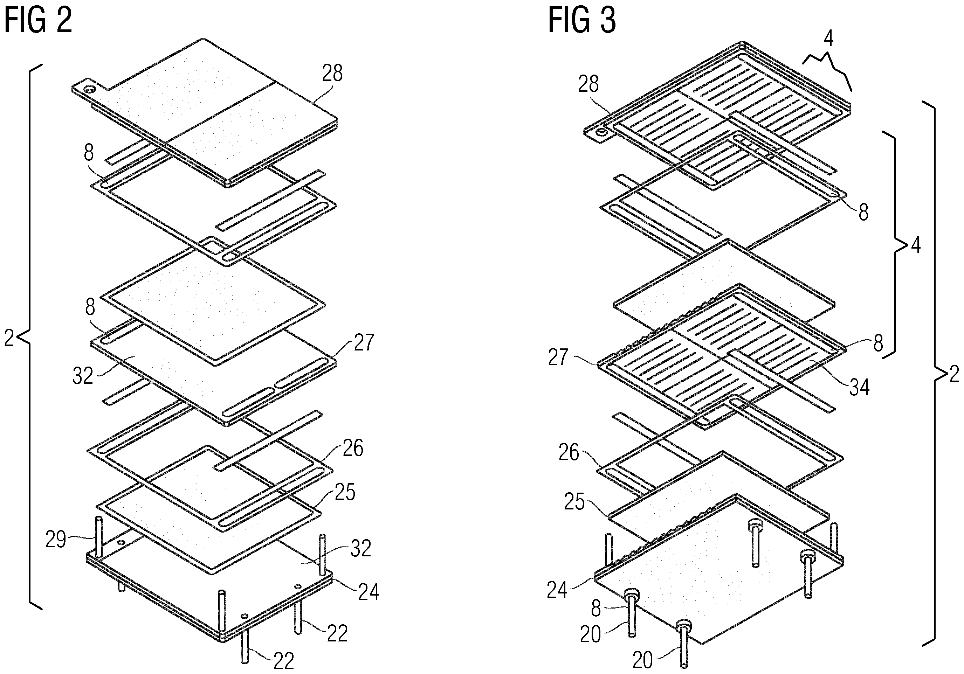

Mehrere der in Figur 1 beschriebenen Speicherzellen 4 sind zu einem sogenannten Stack 2 zusammengefasst. Der Aufbau eines Stacks 2 und die Anordnung der Speicherzellen 4 in dem Stack 2 ist anhand der Explosionsdarstellungen in Figur 2 und Figur 3 veranschaulicht. In Figur 2 ist der Aufbau eines Stacks dargestellt, der von oben betrachtet ist und hierbei in der Reihenfolge von unten nach oben zusammengesetzt wird. Der Stack 2 umfasst zunächst eine Bodenplatte 24, die gegebenenfalls aus mehreren Einzelplatten, die wiederum funktionale Strukturierungen und Vertiefungen beispielsweise zur Luftführung aufweisen, zusammengesetzt ist. Diese Zusammensetzung von Einzelplatten, die hier nicht näher beschrieben ist, zur Bodenplatte 24 erfolgt beispielsweise durch ein Hartlotverfahren.

Die Grundplatte 24 weist eine Luftzufuhr 20 sowie eine Luftabfuhr 22 auf. Wie bereits beschrieben, sind durch die Zusammensetzung von Einzelplatten in der Bodenplatte 24 hier nicht sichtbare Kanäle zur Luftzufuhr integriert. Ferner weist die Bodenplatte 24 Zentrierbolzen 29 auf, durch die nun weitere Komponenten des Stacks 2 zentriert aufgebracht werden können. Als nächste Schicht folgt eine Elektroden-Elektrolyt-Einheit 25, die insbesondere die bereits beschriebene positive Elektrode 6, den Festkörperelektrolyten 7 sowie die Speicherelektrode 10 umfasst. Hierbei handelt es sich um eine selbsttragende keramische Struktur, auf die die einzelnen funktionalen Bereiche wie die Elektroden bzw. der Festkörperelektrolyt in einem Dünn- bzw. Dickschichtverfahren aufgebracht sind.

Als weitere Schicht folgt eine Dichtung 26, die beispielsweise aus einer etwas oberhalb der Betriebstemperatur aufschmelzende Glasfritte besteht, die die einzelnen Platten des Stacks 2 danach bei den Betriebstemperaturen der Batterie abdichtet. Die nächste folgende Platte ist eine sogenannte Interkonnektorplatte 27, die zwei funktional wirkende Seiten aufweist. An ihrer in Fig. 3 sichtbaren unteren Seite 34 befinden sich die dargestellten Luftzufuhrkanäle (Luftkanäle 18) die an die positive Elektrode 6 einer Speicherzelle 4 grenzen. Auf der Oberseite (Speicherseite 32) weist die Interkonnektorplatte 27 (in Fig. 2 nicht näher dargestellte) Kontaktstifte 12 auf, die die Speicherstruktur 9 durchdringen bzw. die in diese eingebracht sind. Die Oberseite der Interkonnektorplatte 27 in Figur 2 weist dieselbe Struktur auf wie die Oberseite der Grundplatte 24. Auch hier sind die Kontaktstifte 12 zur Einbringung in das Speichermedium 9 vorgesehen. Diese Seite mit den Kontaktstiften 12 ist jeweils der Speicherelektrode 10 der Speicherzelle 4 zugewandt.

Exemplarisch ist in Figur 2 eine weitere Ebene der Folge von Elektroden-Elektrolyt-Einheit 25, Dichtung 26 unter einer Abschlussplatte 28 zum Gesamtaufbau des Stacks 2 dargestellt. Grundsätzlich können selbstverständlich noch eine Reihe weiterer Ebenen dieser Bauteile folgen, so dass ein Stack üblicherweise zwischen 10 und mehr Schichten von Speicherzellen 4 aufweist.

In Figur 3 ist derselbe Stack 2, der in der Figur 2 beschrieben ist, in umgekehrter Blickrichtung dargestellt. In Figur 3 blickt man von unten auf die Grundplatte 24, es folgt wiederum die Elektroden-Elektrolyt-Einheit 25 und die Dichtung 26. Die Interkonnektorplatte 27 ist nun ebenfalls von unten sichtbar, wobei hierbei der Blick auf die Luftseite 34 gelenkt ist, die der Luftelektrode zugewandt ist (Luftseite 34). In diesem Beispiel sind auf der Interkonnektorplatte vier getrennte Bereiche auf der Luftseite 34 dargestellt, die einer Unterteilung in vier einzelne Speicherzellen pro Stackebene entsprechen (wobei diese Unterteilung in vier Speicherzellen als rein exemplarisch anzusehen ist). Die Speicherzelle 4 setzt sich somit in diesem Beispiel aus einem Viertel der Fläche der jeweiligen Interkonnektorplatte 27 bzw. der Grundplatte 24 bzw. der Deckplatte 28 zusammen. Ferner wird die jeweilige Zelle 4 durch eine Abfolge der jeweiligen Luftseite 34, Dichtung 26, Elektroden-Elektrolyt-Einheit 25 und wiederum jeweils ein Viertel der Speicherseite 32 der Grundplatte 24 bzw. der Interkonnektorplatte 27 gebildet. Die Luftseite 34 wird hierbei durch eine hier nicht näher dargestellte stackinterne Luftverteilungsvorrichtung (auch Manifold genannt), die mehrere Ebenen des Stacks umfasst, mit dem Prozessgas Luft versorgt. Die Versorgung der Speicherseite mit dem gasförmigen Redoxpaar erfolgt in diesem Beispiel dadurch, dass die Speicherseiten der Interkonnektorplatten zur Umgebung offen sind und der Stack in einem Behälter steht, der mit Wasserdampf/Wasserstoff-Gemisch gefüllt ist.

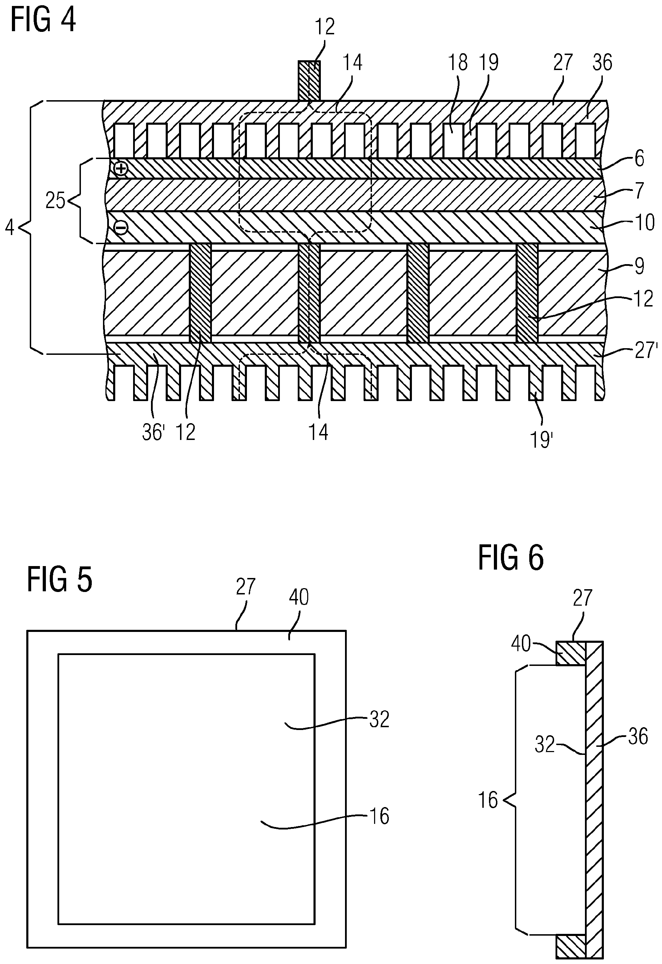

In Figur 4 ist ein Querschnitt durch eine Speicherzelle 4 dargestellt, anhand dessen auch ein Strompfad 14 des durch den Stack fließenden Stromes exemplarisch durch die gestrichelte Linie 14 veranschaulicht ist. Die Zelle 4 beginnt dabei von oben nach unten betrachtet mit einer Interkonnektorplatte 27, die an ihrer Luftseite Kontaktstege 19 aufweist, durch die wiederum die Luftkanäle 18 gebildet werden. An den Oberflächen der Kontaktstege 19 liegt die Elektroden-Elektrolyt-Einheit 25 an, die die positive Elektrode (Luftelektrode 6), den Feststoffelektrolyten 7 sowie die negative Elektrode, genannt Speicherelektrode 10 umfasst. An der Speicherelektrode 10 liegen wiederum Kontaktstifte 12 an, durch die der Strom abgeleitet und weiter zu dem Volumenmaterial 36 der Interkonnektorplatte 27 geführt wird.

In Figur 5 ist eine Draufsicht auf eine Interkonnektorplatte 27 dargestellt, wobei auf die Speicherseite geblickt wird. Hierbei ist eine Aufnahmevertiefung 16 zu erkennen, die (hier beispielhaft) rechteckig ausgestaltet ist, und die zur Aufnahme einer noch zu erneuernden Speicherstruktur 9 dient. Die Aufnahmevertiefung 16 wird durch einen Rand 40 auf der Interkonnektorplatte umrandet.

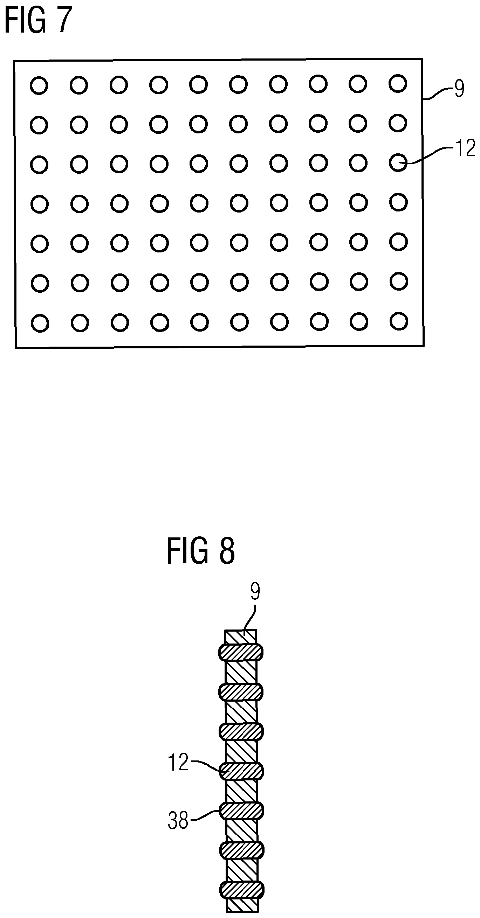

In Figur 7 ist die Speicherstruktur 9 dargestellt, die in die Aufnahmevertiefung 16 der Interkonnektorplatte 27 eingelegt wird. Die Kontaktpins 12 sind in dieser Ausgestaltung in regelmäßigen Abständen in die Speicherstruktur 9 eingebracht. Hierbei ragen Köpfe 38 der Kontaktpins 12 aus beiden Oberflächen der Speicherstruktur 9 heraus. Diese Köpfe 38 stehen einerseits in Verbindung mit der Interkonnektorplatte 27, auf der gegenüberliegenden Seite stehen die Köpfe 38 in Verbindung mit der Speicherelektrode 10. Die Abrundung der Köpfe 38, die die eigentliche Kontaktfläche bilden, dient dazu, mechanische Spannungen und Drücke auf die einzelnen Komponenten, insbesondere die Elektroden-Elektrolyt-Einheit 25 abzumildern. Die Struktur der Köpfe 38 ist insbesondere in Figur 8 zu erkennen.

Die Integration der Kontaktpins 12 in die Speicherstruktur 9 hat den Vorteil, dass für die Kontaktpins 12 ein anderes Material als für die Interkonnektorplatte gewählt werden kann. Als Material für die Kontaktpins haben sich mechanisch belastbare, höher schmelzende Metalle wie Nickel, Chrom, Nickel- oder Chrombasislegierungen sowie hochlegierte Stähle (FeCr22) bewährt. Diese Metalle sind relativ kostengünstig und gut Strom leitend. Aus mechanischen und herstellungsbedingten Gründen kann jedoch für die Interkonnektorplatte 27 ein anderes, gegebenenfalls leichter zu bearbeitendes und bezüglich der mechanischen und thermischen Eigenschaften optimiertes Material verwendet werden.

Die Herstellung der Speicherstruktur 9 kann durch ein übliches keramisches Pressverfahren (kaltisostatisch, heißisostatisch, uniaxial) bzw. über ein Foliengießverfahren oder über ein Laminationsverfahren erfolgen. Anschließend können noch im Grünzustand oder nach einer Wärmebehandlung mit einem einsetzenden Sinterprozess die Aussparungen für die Kontaktpins durch Bohren, Stanzen, Erodieren, Fräsen, Laser-, Wasser- oder Partikelstrahlschneiden eingebracht werden. Ebenso kann die Speicherstruktur auch endkonturnah beispielsweise durch ein Extrusionsverfahren oder ein keramisches Spritzgussverfahren hergestellt werden.

Die Kontaktpins 12 können anschließend als Stabmaterial in die Aussparungen der Speicherstruktur eingesetzt werden. Vorteilhafterweise werden die Kontaktpins, wie bereits erwähnt, an einen oder an beiden Enden im Kopfbereich leicht abgerundet, um die spätere mechanische Druckbelastung des Deckaufbaus zu minimieren und dabei eine größere Kontaktfläche ausbilden zu können.

In einer alternativen Ausgestaltung können die Kontaktpins auch durch ein Ausfüllen der Aussparungen der Speicherstruktur 9 mit einer Metallschmelze oder durch ein Metallpulver mit einem anschließenden Sinterungsprozess hergestellt werden. Der Rand 40 der Interkonnektorplatte 27, der die Aufnahmevertiefung 16 umrandet und an den hohe Anforderungen an die Toleranzen gestellt werden, da diese die Speicherstruktur bzgl. des Luftkreislaufes abdichten muss, kann beispielsweise durch ein Ausfräsen oder ein elektrochemisches Ätzen bzw. ein Erodieren der Interkonnektorplatte auf der Speicherseite strukturiert werden. Grundsätzlich kann die Interkonnektorplatte 27 aber auch bereits endkonturnah, beispielsweise durch pulvermetallurgisches Fertigungsverfahren oder durch ein Feingussverfahren hergestellt werden. Eine andere Möglichkeit zur Herstellung des Randes 40 besteht in einem Aufschweißen des Randes 40 auf eine Ebene in der Interkonnektorplatte 27.

Es hat sich als zweckmäßig herausgestellt, dass der Durchmesser der Kontaktstifte zwischen 2 mm und 7 mm, bevorzugt zwischen 2 mm und 4 mm beträgt. Ferner sollte der Abstand zwischen den Kontaktstiften zwischen 10 mm und 30 mm betragen. Bevorzugt soll der Abstand zwischen 17 mm und 21 mm betragen. Die Anordnung der Kontaktstifte 12 muss dabei nicht notwendigerweise in regelmäßiger kartesischer Form erfolgen, wie dies in Figur 5 beispielhaft dargestellt ist. Es können hierbei auch andere Anordnungsmuster zweckmäßig sein.

Der Abstand und der Durchmesser der Kontaktstifte 12 ergeben sich im Wesentlichen aus den spezifischen Widerständen, die in der Zelle 4 entlang des Strompfades 14 auf der Speicherseite anzutreffen sind. Durch die Kontaktierung darf ein kritischer Widerstand $R_{krit}$ nicht überschritten werden, den man z.B. gleich 10% des Widerstandes der ideal kontaktierten Elektroden-Elektrolyt-Einheit 25 setzen kann. Der Widerstandsbeitrag der Kontaktierung setzt sich aus 4 Anteilen zusammen:

1. Dem effektiven Widerstandsbeitrag verursacht durch den Stromdurchtritt durch die Grenzfläche zwischen Interkonnektorplatte und Kontaktpin:

$$R_1 = R_{K1} \cdot (L/D)^2$$

dabei bedeuten

$R_{K1}$ den auf die tatsächliche Kontaktfläche bezogenen charakteristischen Widerstand dieses Kontaktes
D den Durchmesser der Kontaktfläche
L den Durchmesser der Elektrodenbereiches, der von diesem Kontakt versorgt wird.

2. Dem effektiven Widerstandsbeitrag verursacht durch den Stromdurchtritt durch die Grenzfläche zwischen Kontaktpin und Speicherelektrode bzw. dem auf diese aufgelegten Kontaktnetz:

$$R_2 \;=\; R_{K2} \cdot (L/D)^2$$

wobei die Bedeutung von $R_{K2}$ analog ist zu 1. und die plausible Annahme getroffen wurde, dass die Kontaktgeometrie vergleichbar ist zu 1.

3. Dem effektiven Widerstandsbeitrag verursacht durch den Spannungsabfall längs des Kontaktpins:

$$R_3 \;=\; \rho_P \; \overline{h} \; (L/D)^2$$

wobei

$\rho_P$ den spezifischen Widerstand des Pin-Materials,
h die Länge des Pins bedeutet.

4. Dem effektiven Widerstand der Stromeinschnürung in der Speicherelektrode bzw. der zusätzlich von dem Kontaktnetz bedeckten Speicherelektrode:

$$R_4 \;=\; \gamma \; R \; L^2$$

Wobei

$$\gamma \;\approx\; \tfrac{1}{4}[\ln(L/D) \;-\; 3/4 \;+\; (D/L)^2(\ln(L/D) \;+\; 1/4)$$

R den effektiven Bahnwiderstand der Speicherelektrode bedeutet, der, wenn das Kontaktnetz nur an den Andruckflächen der Kontaktpins aufliegt durch p/d gegeben ist wobei
p den spezifischen elektronischen Widerstand der Speicherelektrode
d ihre Dicke bedeutet.

Grenzwerte für die Auslegung von L , D und h ergeben sich dann daraus, dass jeder der Teilwiderstände kleiner als der kritische Widerstand bleibt:

$$R_1 \;<\; R_{krit} \;,$$

$$R_2 \;<\; R_{krit} \;,$$

$$R_3 \;<\; R_{krit} \;,$$

$$R_4 \;<\; R_{krit} \;.$$

**Patentansprüche**

1. Elektrischer Energiespeicher in Form einer Wiederaufladbaren Oxidbatterie mit einer Speicherzelle (4), die wiederum eine Luftelektrode (6), die mit Luftkanälen (18) einer Luftzufuhrvorrichtung (20) in Verbindung steht und eine Speicherelektrode (10) umfasst, wobei die Speicherelektrode (10) an eine ein poröses Energiespeichermedium umfassende Speicherstruktur (9) angrenzt, wobei an der Speicherelektrode (10) elektrische Kontakte anliegen, **dadurch gekennzeichnet, dass** in die Speicherstruktur (9) Kontaktpins (12) integriert sind, die aus einer Oberfläche der Speicherstruktur (9) herausragen und die Kontaktpins (12) mit der Speicherelektrode (10) elektrisch in Kontakt stehen.

2. Energiespeicher nach Anspruch 1, **dadurch gekennzeichnet, dass** eine Interkonnektorplatte (27) vorgesehen ist, wobei auf einer Seite, der Luftseite (34), die Luftkanäle (18) angeordnet sind und auf einer gegenüberliegenden Seite, der Speicherseite (32), eine Aufnahmevertiefung (16) für die Speicherstruktur (9) angeordnet ist.

3. Energiespeicher nach Anspruch 2, **dadurch gekennzeichnet, dass** ein Strompfad folgende Bauteilkomponenten durchläuft:

    - ein Volumenmaterial (36) einer ersten Interkonnektorplatte (27),
    - Kontaktstege (19) zwischen den Luftkanälen (18) der ersten Interkonnektorplatte (27),
    - die Luftelektrode (6),
    - einen Festkörperelektrolyten (7),
    - die Speicherelektrode (10),
    - die Kontaktpins (12) der Speicherstruktur (9),
    - das Volumenmaterial (36') der zweiten Interkonnektorplatte (27').

4. Energiespeicher nach einem der vorhergehenden Ansprüche, **dadurch gekennzeichnet, dass** der Durchmesser der Kontaktpins (12) zwischen 2 mm und 7 mm, bevorzugt zwischen 2 mm und 4 mm beträgt.

5. Energiespeicher nach einem der vorhergehenden Ansprüche, **dadurch gekennzeichnet, dass** die Kontaktpin (12) einen Abstand zwischen 10 mm und 30 mm, bevorzugt zwischen 17 mm und 21 mm beträgt.

6. Energiespeicher nach einem der vorhergehenden Ansprüche, **dadurch gekennzeichnet, dass** die Kontaktpins (12) abgerundete Köpfe (38) aufweisen.

**Claims**

1. Electrical energy store in the form of a rechargeable oxide battery comprising a storage cell (4), which in turn comprises an air electrode (6), which is connected to air channels (18) of an air inlet apparatus (20), and a storage electrode (10), wherein the storage electrode (10) adjoins a storage structure (9) comprising a porous energy storage medium, wherein electrical contacts rest on the storage electrode (10), **characterized in that** contact pins (12) are integrated in the storage structure (9), said contact pins (12) protruding out of a surface of the storage structure (9) and being in electrical contact with the storage electrode (10).

2. Energy store according to Claim 1, **characterized in that** an interconnector plate (27) is provided, wherein the air channels (18) are arranged on one side, the air side (34), and a receiving depression (16) for the storage structure (9) is arranged on an opposite side, the storage side (32).

3. Energy store according to Claim 2, **characterized in that** a current path passes through the following component parts:

    - a volume material (36) of a first interconnector plate (27),
    - contact webs (19) between the air channels (18) of the first interconnector plate (27),
    - the air electrode (6),
    - a solid electrolyte (7),
    - the storage electrode (10),
    - the contact pins (12) of the storage structure (9),
    - the volume material (36') of the second interconnector plate (27').

4. Energy store according to one of the preceding claims, **characterized in that** the diameter of the contact pins (12) is between 2 mm and 7 mm, preferably between 2 mm and 4 mm.

5. Energy store according to one of the preceding claims, **characterized in that** the contact pins (12) have a spacing of between 10 mm and 30 mm, preferably between 17 mm and 21 mm.

6. Energy store according to one of the preceding claims, **characterized in that** the contact pins (12) have rounded heads (38).

**Revendications**

1. Accumulateur d'énergie électrique sous la forme d'une batterie à oxyde, ayant une cellule (4) d'accumulation, qui comprend à son tour une électrode (6) à air, qui est en liaison avec des canaux (18) pour de l'air d'un dispositif (20) d'apport d'air, et une électrode (10) d'accumulation, l'électrode (10) d'accumulation étant voisine d'une structure (9) d'accumulation, comprenant un milieu poreux d'accumulation d'énergie, des contacts électriques s'appliquant à l'électrode (10) d'accumulation, **caractérisé en ce que**, dans la structure (9) d'accumulation sont intégrées des broches (12) de contact, qui sortent d'une surface de la structure (9) d'accumulation et les broches (12) de contact sont en contact électrique avec l'électrode (10) d'accumulation.

2. Accumulateur d'énergie suivant la revendication 1, **caractérisé en ce qu'**une plaque (27) d'interconnexion est prévue, dans lequel, d'un côté, le côté (34) d'air, sont disposés les canaux (18) pour de l'air et, d'un côté opposé, le côté (32) d'accumulation, est disposé un renfoncement (16) de réception de la structure (9) d'accumulation.

3. Accumulateur d'énergie suivant la revendication 2, **caractérisé en ce qu'**un trajet de courant passe dans les composants suivantes :

   - un matériau (36) ayant du volume d'une première plaque (27) d'interconnexion,
   - des barrettes (19) de contact entre les canaux (18) pour de l'air de la première plaque (27) d'interconnexion,
   - l'électrode (6) à air,
   - un électrolyte (7) solide,
   - l'électrode (10) d'accumulation,
   - les broches (12) de contact de la structure (9) d'accumulation,
   - le matériau (36') ayant du volume de la deuxième plaque (27') d'interconnexion.

4. Accumulateur d'énergie suivant l'une des revendications précédentes, **caractérisé en ce que** le diamètre des broches (12) de contact est compris entre 2 mm et 7 mm, en étant de préférence compris entre 2 mm et 4 mm.

5. Accumulateur d'énergie suivant l'une des revendications précédentes, **caractérisé en ce qu'**un intervalle entre les broches (12) de contact est compris entre 10 mm et 30 mm, de préférence entre 17 mm et 21 mm.

6. Accumulateur d'énergie suivant l'une des revendications précédentes, **caractérisé en ce que** les broches (12) de contact ont des têtes (38) arrondies.

# FIG 1
(Stand der Technik)

FIG 2

FIG 3

FIG 4

FIG 5

FIG 6

## FIG 7

## FIG 8

**IN DER BESCHREIBUNG AUFGEFÜHRTE DOKUMENTE**

**In der Beschreibung aufgeführte Patentdokumente**

- DE 102009057720 A1